# EUROPÄISCHE PATENTSCHRIFT

(11) **EP 1 844 058 B1**
(45) Veröffentlichungstag und Bekanntmachung des Hinweises auf die Patenterteilung: **11.04.2012**
(21) Anmeldenummer: 06706621.7
(22) Anmeldetag: 03.02.2006
(51) Int. Cl.: C07F 7/12, C07F 7/10, C08G 77/60

(54) **VERFAHREN ZUR KONTINUIERLICHEN HERSTELLUNG KOHLENSTOFFHALTIGER MONO-, OLIGO- UND/ODER POLYBOROSILAZANE**
METHOD FOR THE CONTINUOUS PRODUCTION OF MONO-, OLIGO- AND/OR POLYBOROSILAZANES THAT CONTAIN CARBON
PROCEDE POUR LA PRODUCTION CONTINUE DE MONOBOROSILAZANES, D'OLIGOBOROSILAZANES ET/OU DE POLYBOROSILAZANES CARBONES

(30) Priorität: 05.02.2005 DE 102005005383
(43) Veröffentlichungstag der Anmeldung: 17.10.2007
(73) Patentinhaber: Max-Planck-Gesellschaft zur Förderung der Wissenschaften e.V., 80539 München (DE)
(72) Erfinder: JANSEN, Martin, 71229 Leonberg (DE); JÄSCHKE, Thomas, 70195 Stuttgart (DE); KÄHSNITZ, John, 45721 Haltern am See (DE); SCHMIDT, Jörg, 79713 Bad Säckingen (DE); SCHLADERBECK, Norbert, 65779 Kelkheim (DE)
(74) Vertreter: Dey, Michael
(86) Internationale Anmeldenummer: PCT/EP2006/000953
(87) Internationale Veröffentlichungsnummer: WO 2006/082069

(56) Entgegenhaltungen:
- EP-A- 0 031 423
- DE-A1- 4 241 288
- DE-A1- 4 302 211
- DE-A1- 4 320 784
- DE-A1- 19 530 390

## Beschreibung

Die vorliegende Erfindung betrifft ein Verfahren zur Herstellung kohlenstoffhaltiger Borosilazane, eine dafür geeignete Vorrichtung, deren Verwendung und das dabei erhaltene Verfahrensprodukt.

Nichtoxidische Keramikwerkstoffe sind den heutigen, meist oxidischen Hochleistungskeramiken in ihrer Temperaturbeständigkeit deutlich überlegen. So behalten multinäre (carbid)nitridische Werkstoffe selbst bei hohen Temperaturen bis mindestens 1500 °C ihre guten mechanischen Eigenschaften. Als besonders vorteilhaft hat sich bisher das quarternäre System Si/B/N/C erwiesen (DE 101 04 536 A1, WO 02/22625 A1, US 5 312 942, DE 100 45 428 A1, DE 100 45 427 A1, DE 196 28 448 A1).

Die Synthese von Si/BlN/C-Keramiken erfolgt durch thermische Zersetzung (Pyrolyse) entsprechender präkeramischer Polymere, die aus molekularen Vorläufern durch Polymerisation zugänglich sind (Polymerroute). Homogene Si/B/N/C-Keramiken erfordern dabei den Einsatz so genannter Einkomponentenvorläufer. In der Regel enthalten die Einkomponentenvorläuferverbindungen bzw. präkeramischen Polymeren bereits alle für die resultierende Keramik angestrebten (kationischen) Elemente in einem Molekül. Präkeramische Polymere stellen in der Regel ein Gemisch aus kohlenstoffhaltigen Mono-, Oligosowie Polyborosilazanen (nachfolgend auch kurz Polyborosilazane oder Polymere genannt) dar.

Um die auf diesem Wege erhaltenen keramischen Produkte für ein breiteres Anwendungsspektrum wirtschaftlich einsetzbar zu gestalten, ist eine kosteneffektive Herstellungsroute zu dem hierfür notwendigen monomeren Rohstoff anzustreben. Insbesondere ist man bemüht, möglichst preisgünstige Komponenten als Edukte zu verwenden.

Diese wirtschaftlichen Randbedingungen an die Rohstoffe werden derzeit von Methylchlorsilanen (MCS, ex Müller-Rochow-Synthese) und Hexamethyldisilazan (HMDS) erfüllt.

Durch Silazanspaltung von HMDS mit unterschiedlichen Methylchlorsilanen (MCS) und nachfolgender Umsetzung mit Bortrichlorid (BCl₃) sind die monomeren Einkomponentenvorläufer zugänglich. Je nach eingesetztem MCS-Rohstoff erhält man beispielsweise aus Tetrachlorsilan Trichlorsilylaminodichlorboran (TADB), aus Methyltrichlorsilan Methyldichlorsilylaminodichlorboran (MADB) oder aus Dimethyldichlorsitan Dimethylchlorsiiylaminodichforboran (DADB).

Die anschließende Vernetzung der chlorhaltigen monomeren Vorläufer zu dem entsprechenden präkeramischen Polymer erfolgt durch Umsetzung mit einem stickstoffhaltigen Vemetzungsreagenz, beispielsweise Ammoniak oder ein primäres Amin. Um eine möglichst vollständige Vernetzung unter Substitution der Chlorfunktionen des Vorläufermoleküls zu erreichen, wird das Amin im hohen molaren Überschuss eingesetzt. Die Aminolyse wird in der Regel in einem inerten Lösemittel durchgeführt, worin sich das Polymer-löst und dadurch das ebenfalls bei der Aminolyse gebildete Ammoniumhydrochlorid abgetrennt werden kann. Nach Entfernen des Lösemittels erhält man ein präkeramisches Polymer, das in der Regel noch einen deutlichen Anteil an Chlorid aufweist.

Dieses bisher verwendete Polymerisationsverfahren weist zwei entscheidende Nachteile auf. Ein so erhaltenes präkeramisches Polymer enthält trotz eines vielfachen Überschusses an Ammoniak bzw. Amin noch deutliche Mengen an Chlorid. Ferner werden bei der Synthese große Mengen Lösemittel verbraucht.

DE 195 30 390 betrifft unschmelzbare Polyborosilazane, Verfahren zu deren Herstellung und ihre Verwendung zur Herstellung von keramischen Pulvern, Fasern und Formkörpern. Die offenbarten Polyborosilazane sind erhältlich durch Umsetzung von schmelzbaren Polyborosilazanen mit Boran-Amin-Addukten.

EP 0 031 423 A1 beschreibt ein Verfahren zur Herstellung von Polyphenyl-Polymethyl-Polyaminen. Ferner wird eine Vorrichtung zur Durchführung des Verfahrens beschrieben.

Der vorliegenden Erfindung lag die Aufgabe zugrunde, eine weitere Möglichkeit bereitzustellen, präkeramisches Polymer möglichst wirtschaftlich herzustellen. Insbesondere bestanden die Anliegen, den Verbrauch an Lösemittel zu verringern sowie ein Produkt mit einem möglichst geringen Chloridgehalt herzustellen.

Die gestellte Aufgabe wird erfindungsgemäß entsprechend den Angaben der Patentansprüche gelöst.

Überraschenderweise wurde gefunden, dass man beim vorliegenden Verfahren die während der Aminolyse mitunter austretende Mehrphasigkeit des Produktgemischs für die Abtrennung des Polymers vom Ammoniumsalz vorteilhaft nutzen kann, wodurch eine aufwendige Filtration vermieden und die benötigte Menge an Lösemittel drastisch reduziert werden kann. So kann die entstandene Polyborosilazan/Lösemittel-Phase kontinuierlich von der Hydrochlorid/Amin-Phase durch Phasentrennung abgetrennt und gegebenenfalls durch Nachneutralisation und anschließende Feinfiltration nachbehandelt werden. Die Hydrochlorid/Amin-Phase enthält dabei den hauptsächlichen Anteil des gebildeten Hydrochlorids und kann entweder verworfen oder gegebenenfalls nach einer geeigneten Behandlung, beispielsweise mit einem Neutralisationsmittel, aufgearbeitet und als Edukt in das System zurückgeführt werden. Als Neutralisationsmittel kann man dabei z.B. Ammoniak, Alkalialkyle, wie Na-Methylat, Alkalialkoholate, wie Na-Methanolat, organische Amine, Alkalilaugen, wie NaOH, KOH, oder Alkalihydride, wie LiH, NaH, LiAlH₄ - um nur einige Beispiele zu nennen - verwenden. Ferner kann das Amin durch Destillation leicht vom Ammoniumsalz abgetrennt und als Edukt einem erneuten Reaktionslauf (Aminolyse) zugeführt werden. Ferner kann das Lösemittel von der Polyboresilazan/Lösemittel-Phase (nachfolgend auch kurz Lösemittelphase genannt) kontinuierlich durch Destillation abgetrennt und vorteilhaft wieder verwendet werden.

Auch kann man die Aminolyse ohne einen Zusatz an Lösemittel in einem Rührkessel durchführen. Dabei kann man vorteilhaft Teile des Produktgemischs kontinuierlich entnehmen, in eine Extraktionsvorrichtung überführen und den entnommenen Anteil durch entsprechende Mengen an Edukt ersetzen. In der Extraktion kann nun unter Zusatz eines Extraktions- bzw. Lösemittels das Umsetzungsprodukt der Aminoiyse von der Hydrochlorid/Amin-Phase in die Lösemittel- bzw. Extraktionsmittelphase überführt und beide Phasen von einander getrennt werden. Dabei kann die Extraktion mit anschließender Destillation der Lösemittel- bzw. Extraktionsmittelphase und Rückführung des dabei gewonnenen Löse- bzw. Extraktionsmittels in das System kontinuierlich und damit besonders wirtschaftlich betrieben werden.

In einem weiteren, vorzugsweise kontinuierlich betriebenen Verfahrensschritt des vorliegenden Verfahrens kann der Chlorgehalt des nach der Destillation erhaltenen, so genannten Polymers nochmals vorteilhaft gesenkt werden, wodurch eine hohe, für die Weiterverarbeitung zu einem Polymer anzustrebende Reinheit erreicht werden kann. Dabei kann das so genannte Polymer vorteilhaft mit reaktiven Metallamiden, Hydriden oder Metallorganylen, z.B. Lithiumdimethylamid, Magnesium-bis(dimethylamid), Lithiumaluminiumhydrid, Methyllithium, Dimethylmagnesium, umgesetzt und so restliche Chlorfunktionen als Metallsalze abgetrennt werden. Auch kann diese Nachbehandlung des Polymers vorteilhaft mit sekundären Aminen unter Druck durchgeführt werden.

Gegenstand der vorliegenden Erfindung ist daher ein Verfahren zur Herstellung von kohlenstoffhaltigen Polyborosilazanen, wobei man
(i) in einem Aminolyseschritt eine Einkomponentenvorläuferverbindung mit Ammoniak oder einem organischen Amin umsetzt,
(ii) Reaktionsgemisch aus der Aminolyse in einem kontinuierlich betriebenen Extraktionsschritt mindestens einmal mit einem organischen Lösemittel extrahiert,
(iii) bei der Extraktion anfallende ammoniak- bzw. organoaminhaltige Phase verwirft, aufarbeitet oder zumindest anteilig zurückführt,
(iv) aus der lösemittelhaltigen Phase der Extraktion kohlenstoffhaltige Mono-, Oligo- und/oder Polyborosilazane gewinnt und
(v) das in Schritt (iv) erhaltene kohlenstoffhaltige monomere, oligomere und/oder polymere Borosilazan in einem Lösemittel löst und dieser Lösung oder, im Sinne von Schritt (iv), der aus der Extraktion (ii) stammenden, lösemittelhaltigen Phase eine starke Base zusetzt, wobei unter den vorherrschenden Bedingungen ein (kristallines) Chlorid entsteht, man dieses Salz von der flüssigen, löse- bzw. extraktionsmittelhaltigen Phase abtrennt und den Behandlungsschritt einmal oder mehrmals wiederholt.

Unter Einkomponentenvorläuferverbindungen sollen bei der vorliegenden Erfindung im Wesentlichen Silylaminohalogenborane, Silylalkylhalogenborane, Silylaminoborazine, Silylalkylborazine oder Mischungen aus mindestens zwei der zuvor genannten Verbindungen verstanden werden.

So setzt man beim erfindungsgemäßen Verfahren in Schritt (i) vorzugsweise ein Silylaminohalogenboran der allgemeinen Formel Ia

X₍₃₋ₙ₎RₙSi-(NR¹)-BRₘX'₍₂₋ₘ₎ (Ia),

worin Gruppen R gleich oder verschieden sind und R einen linearen, verzweigten oder cyclischen Kohlenwasserstoffrest mit 1 bis 20 C-Atomen darstellt, R¹ für ein Wasserstoffatom oder einen linearen, verzweigten oder cyclischen Kohlenwasserstoffrest mit 1 bis 20 C-Atomen, vorzugsweise Wasserstoff oder Methyl, steht, Gruppen X und X' gleich oder verschieden sind und X sowie X' für H, F, Cl, Br, J oder eine Alkylaminogruppe, wie -NR²₂, wobei Gruppen R² gleich oder verschieden sind und R² für ein Wasserstoffatom oder einen linearen, verzeigten oder cyclischen Kohlenwasserstoffrest mit 1 bis 20 C-Atomen, vorzugsweise Methyl oder Methyl gemeinsam mit Wasserstoff, steht, oder eine Alkoxygruppe, wie -OR³, wobei R³ ein Wasserstoffatom oder einen linearen, verzweigten oder cyclischen Kohlenwasserstoffrest mit 1 bis 20 C-Atomen darstellt, vorzugsweise Methoxy oder Ethoxy, stehen und n sowie m unabhängig voneinander die Zahlenwerte 0, 1 oder 2, vorzugsweise n die Werte 0, 1 oder 2 und m die Werte 0 oder 1, annehmen können,
oder ein Silylalkylhalogenboran der allgemeinen Formel lb

X₍₃₋ₙ₎RₙSi-[C(R⁴)₂]ₚ-BRₘX'₍₂₋ₘ₎ (Ib)

worin Gruppen R gleich oder verschieden sind und R einen linearen, verzweigten oder cyclischen Kohlenwasserstoffrest mit 1 bis 20 C-Atomen darstellt, R⁴ unabhängig für ein Wasserstoffatom oder einen linearen, verzweigten oder cyclischen Kohlenwasserstoffrest mit 1 bis 20 C-Atomen steht, vorzugsweise Wasserstoff, Methyl, Methyl, Propyl, Butyl, Pentyl, oder direkt benachbarte Einheiten R⁴ über eine kovalente Bindung miteinander verbrückt sind, p den Zahlenwert 1, 2 oder 3 annehmen kann, Gruppen X sowie X' gleich oder verschieden sind und X sowie X' für H, F, Cl, Br, J oder eine Alkylaminogruppe, wie -NR²₂, wobei Gruppen R² gleich oder verschieden sind und R² für ein Wasserstoffatom oder einen linearen, verzeigten oder cyclischen Kohlenwasserstoffrest mit 1 bis 20 C-Atomen, vorzugsweise Methyl oder Methyl gemeinsam mit Wasserstoff, steht, oder eine Alkoxygruppe, wie -OR³, wobei R³ ein Wasserstoffatom oder einen linearen, verzweigten oder cyclischen Kohlenwasserstoffrest mit 1 bis 20 C-Atomen darstellt, vorzugsweise Methoxy oder Ethoxy, stehen und n sowie m unabhängig voneinander die Zahlenwerte 0, 1 oder 2, vorzugsweise n die Werte 0, 1 oder 2 und m die Werte 0 oder 1, annehmen können,
oder ein Silylaminoborazin der allgemeinen Formel Ic worin Gruppen R gleich oder verschieden sind und R einen linearen, 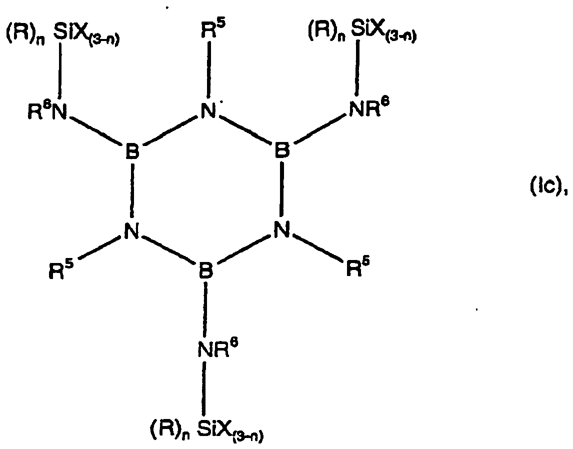 verzweigten oder cyclischen Kohlenwasserstoffrest mit 1 bis 20 C-Atomen darstellt, Gruppen R⁵ und R⁶ gleich oder verschieden sind und R⁵ bzw. R⁶ für ein Wasserstoffatom oder einen linearen, verzweigten oder cyclischen Kohlenwasserstoffrest mit 1 bis 20 C-Atomen, vorzugsweise Wasserstoff oder Methyl, steht, Gruppen X und X' gleich oder verschieden sind und X sowie X' für H, F, Cl, Br, J, vorzugsweise Cl, oder eine Alkylaminogruppe, wie -NR²₂, wobei Gruppen R² gleich oder verschieden sind und R² für ein Wasserstoffatom oder einen linearen, verzeigten oder cyclischen Kohlenwasserstoffrest mit 1 bis 20 C-Atomen, vorzugsweise Methyl oder Methyl gemeinsam mit Wasserstoff, steht, oder eine Alkoxygruppe, wie -OR³, wobei R³ ein Wasserstoffatom oder einen linearen, verzweigten oder cyclischen Kohlenwasserstoffrest mit 1 bis 20 CAtomen darstellt, vorzugsweise Methoxy oder Ethoxy, stehen und n den Zahlenwert 0, 1 oder 2 annehmen kann,
oder ein Silylalkylborazin der allgemeinen Formel ld 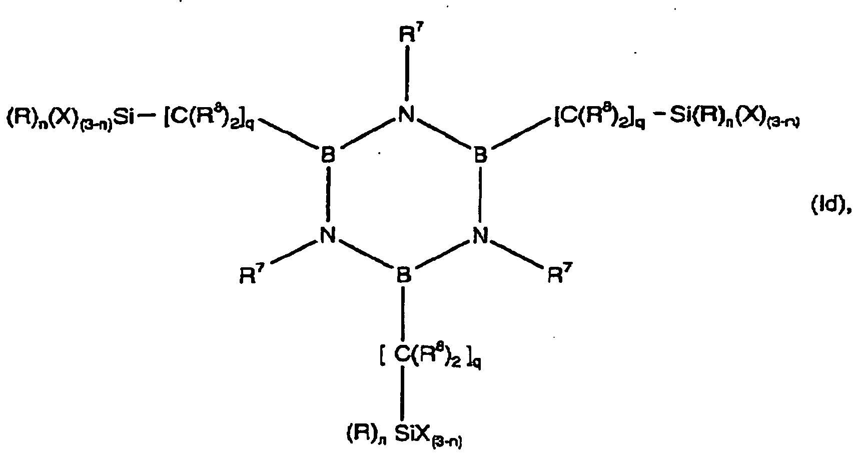 worin Gruppen R gleich oder verschieden sind und R einen linearen, verzweigten oder cyclischen Kohlenwasserstoffrest mit 1 bis 20 C-Atomen darstellt, R⁷ unabhängig für ein Wasserstoffatom oder einen linearen, verzweigten oder cyclischen Kohlenwasserstoffrest mit 1 bis 20 C-Atomen, vorzugsweise Wasserstoff oder Methyl, steht, R⁸ unabhängig für ein Wasserstoffatom oder einen linearen, verzweigten oder cyclischen Kohlenwasserstoffrest mit 1 bis 20 C-Atomen steht, vorzugsweise Wasserstoff, Methyl, Ethyl, Propyl, Butyl, Pentyl, oder direkt benachbarte Einheiten R⁸ über eine kovalente Bindung miteinander verbrückt sind, q den Zahlenwert 1 , 2 oder 3 annehmen kann, Gruppen X gleich oder verschieden sind und X für H, F, Cl, Br, J, vorzugsweise Cl, oder eine Alkylaminogruppe, wie -NR²₂, wobei Gruppen R² gleich oder verschieden sind und R² für ein Wasserstoffatom oder einen linearen, verzweigten oder cyclischen Kohlenwasserstoffrest mit 1 bis 20 CAtomen, vorzugsweise Methyl oder Methyl gemeinsam mit Wasserstoff, steht, oder eine Alkoxygruppe, wie -OR³, wobei R³ ein Wasserstoffatom oder einen linearen, verzweigten oder cyclischen Kohlenwasserstoffrest mit 1 bis 20 C-Atomen darstellt, vorzugsweise Methoxy oder Ethoxy, steht und n unabhängig den Zahlenwert 0, 1 oder 2 annehmen kann, oder ein Gemisch aus mindestens zwei Verbindungen der Formeln 1a bis 1 dein.

Insbesondere bevorzugt man dabei eine Einkomponentenvorläuferverbindung gemäß zuvor genannter Formeln Ia bis Id aus der Reihe Trichlorsilylaminodichlorboran, Methyldichlorsilylaminodichlorboran, Dimethylchlorsilylaminodichlorboran, Trichlorsilylaminochiormethylboran, Methyldichlorsilylaminochlormethylboran, Dimethylchlorsilylaminochlormethylboran, Trichlorsilyl-dichlorboryl-methan, Methyldichlorsilyl-dichlorborylmethan, Dimethylchlorsilyl-dichlorboryl-methan, Trichlorsilyl-chlormethylboryl-methan, Methyldichlorsilyl-chlormethylboryl-methan, Dimethylchlorsilyl-chlormethylboryl-methan, B,B',B"-Tris(trichlorsilylamino)borazin, B,B',B"-Tris[dichlor(methyl)silylamino]borazin, B,B',B"-Tris[chlor(dimethyl)silylamino]borazin, B,B',B"-Tris(trichforsiiylmethyl)borazin, B,B',B"-Tris[dichlor(methyl)silylmethyl]borazin, B,B',B"-Tris[chlor(dimethyl)silylmethyl]-borazin oder ein Gemisch aus mindestens zwei der zuvor genannten Verbindungen, wobei der Einsatz von Methyldichlorsilylaminodichlorboran, Trichlorsilylaminodichlorboran, Dichlorborylmethyltrichlorsilylamin, Trichlorsilyl-dichlorboryl-methan, Methyldichlorsilyl-dichrorboryl-methan, B,B',B"-Tris(trichlorsilylamino)borazin, B,B',B"-Tris[dichlor(methyl)silylamino]borazin, B,B',B"-Tris(trichlorsilylmethyl)borazin oder B,B',B"-Tris[dichlor(methyl)silylmethyl]borazin ganz besonders bevorzugt ist.

Weiter bevorzugt man in Schritt (i) den Einsatz von Ammoniak oder eines primären oder sekundären Organoamins der allgemeinen Formel II

R⁹_{y}NH_{(3-y)} (II),

worin Gruppen R⁹ gleich oder verschieden sind und R⁹ einen linearen, verzweigten oder cyclischen Kohlenwasserstoffrest mit 1 bis 20 C-Atomen darstellt und y den Zahlenwert 1 oder 2 annehmen kann,
oder ein Gemisch aus mindestens zwei der zuvor genannten Komponenten. Dabei sind insbesondere flüssiger Ammoniak oder ein primäres oder sekundäres Organoamin aus der Reihe Methylamin, Ethylamin, Dimethylamin oder Diethylamin geeignet, wobei Methylamin besonders bevorzugt eingesetzt wird und sich ein sekundäres Amin im Gemisch mit Ammoniak und/oder einem primären Amin vorteilhaft zur Steuerung des Vemetzungsgrads eignet.

In Schritt (i) des erfindungsgemäßen Verfahrens setzt man den Ammoniak bzw. das Organoamin vorteilhaft im Überschuss ein. Insbesondere wird dabei mindestens ein 4- bis 8-facher molarer Überschuss bevorzugt

Die Aminolyse (i) des erfindungsgemäßen Verfahrens führt man geeigneterweise bei einer Temperatur im Bereich von -50 bis +80 °C sowie einem Druck von 0,1 bis 20 bar abs. durch. Vorzugsweise führt man Schritt (i) bei -40 bis 60 °C, besonders bevorzugt bei -30 bis 30 °C, ganz besonders bevorzugt bei -25 bis 10 °C, insbesondere bei -10 bis 10 °C, sowie bei einem bevorzugten Druck von 0,5 bis 20 bar abs., besonders bevorzugt von 0,8 bis 10 bar abs., ganz besonders bevorzugt von 0,9 bis 3 bar abs., insbesondere bei Umgebungsdruck, durch.

Weiterhin bevorzugt man beim erfindungsgemäßen Verfahren für die Durchführung der Aminolyse (i) Reaktionsbedingungen, bei denen das Reaktionsgemisch einphasig vorliegt.

So kann man die Aminolyse (i) vorteilhaft in Gegenwart eines Lösemittels durchführen. Dabei kann man bei der Aminolyse (i) als Lösemittel einen Stoff oder ein Stoffgemisch aus der Reihe der C₃- bis C₉-Kohlenwasserstoffe einsetzen.

Ferner kann man beim erfindungsgemäßen Verfahren vorteilhaft den Schritt (i) kontinuierlich durchführen, wobei man dem Reaktionsgemisch so viel an Einsatzstoffen zuführt, wie man an Reaktionsgemisch aus Schritt (i) entnimmt und dem Schritt (ii) zuführt.

Geeigneterweise setzt man bei der erfindungsgemäßen Extraktion (ii) als Extraktions- bzw. Lösemittel einen Stoff oder ein Stoffgemisch aus der Reihe der C₃- bis C₉-Kohlenwasserstoffe ein.

Als Extraktions- bzw. Lösemittel verwendet man beim vorliegenden Verfahren vorzugsweise eines aus der Reihe n-Butan, i-Butan, n-Pentan, i-Pentan, n-Hexan, Cyclohexan, n-Octan, i-Octan, Waschbenzin, Toluol, Xylol oder ein Gemisch aus mindestens zwei der zuvor genannten Stoffe. Besonders bevorzugt ist dabei der Einsatz von n-Hexan, Cyclohexan oder n-Pentan.

Weiterhin bevorzugt man bei der Durchführung von Schritt (ii) des erfindungsgemäßen Verfahrens den Einsatz von Löse- bzw. Extraktionsmittel und vorliegendem Ammoniak bzw. Organoamin in einem Volumenverhältnis von 20 : 1 bis 1 : 20. Vorteilhaft arbeitet man bei einem Volumenverhältnis von 10 : 1 bis 1 : 10, besonders bevorzugt von 8 : 1 bis 1 : 2, ganz besonders bevorzugt bei Einsatz von Hexan und Methylamin in einem Volumenverhältnis unter Betriebsbedingungen von 7 : 1 bis 1 : 1, insbesondere von 4 : 1 bis 2 : 1.

So führt man beim erfindungsgemäßen Verfahren die Extraktion (ii) vorteilhaft bei Umgebungsdruck und einer Temperatur im Bereich zwischen -50 °C und dem Siedepunkt des eingesetzten Löse- bzw. Extraktionsmittels oder Organoamins, vorzugsweise zwischen -20 und rd. 80 °C, durch, wobei eine Temperatur im Bereich von -20 bis +30 °C besonders bevorzugt wird.

In der Regel trennt man in der erfindungsgemäßen Extraktion (ii) das Extraktionsgemisch kontinuierlich in eine löse- bzw. extraktionsmittelhaltige Phase und eine ammoniak- bzw. organoaminhaltige Phase auf.

Beim erfindungsgemäßen Verfahren kann die in der vorangehenden Extraktionsstufe abgetrennte ammoniak- bzw. organoaminhaltige Phase nochmals mit einem Löse- bzw. Extraktionsmittel extrahiert werden, um noch vorhandene Restmengen an sogenanntem Polyborosilazan zu gewinnen. So kann die erfindungsgemäße Extraktion (ii) mindestens eine bis sechs, vorzugsweise zwei bis fünf, besonders bevorzugt drei bis vier aufeinander folgende Extraktionsstufen beinhalten.

Weiterhin wird bevorzugt, dass man beim erfindungsgemäßen Verfahren in Schritt (iii) die ammoniak- bzw. organoaminhaltige Phase aus der Extraktion (ii) zumindest anteilig in die Aminolyse (i) zurückführt oder die ammoniak- bzw. organoaminhaltige Phase aus der Extraktion (ii) destilliert und das so zurückgewonnene Organoamin bzw. den Ammoniak wieder verwertet. So kann das Organoamin bzw. der Ammoniak insbesondere als Eduktkomponente bei der Aminolyse oder als Neutralisationsmittel bei der Nachbehandlung vorteilhaft im erfindungsgemäßen Verfahren recycliert werden.

Ferner wird erfindungsgemäß in Schritt (iv) das Löse- bzw. Extraktionsmittel aus der in Schritt (ii) anfallenden löse- bzw. extraktionsmittelhaltigen Phase durch Destillation abgetrennt, gegebenenfalls aufgereinigt und wieder der Aminolyse (i) und/oder der Extraktion (ii) zugeführt und das erhaltene kohlenstoffhaltige Borosilazan (Polymer) gegebenenfalls nachbehandelt.

Zur Durchführung der Nachbehandlung wird beim vorliegenden Verfahren in einem Schritt (v) das in Schritt (iv) erhaltene kohlenstoffhaltige Mono-, Oligo- und/oder Polyborosilazan (auch kurz kohlenstoffhaltiges Polyborosilazan oder Polyborosilazan oder Polymer genannt) in einem Lösemittel gelöst und dieser Lösung oder, im Sinne von Schritt (iv), der aus der Extraktion (ii) stammenden, löse- bzw. extraktionsmittelhaltigen Phase eine starke Base zugesetzt, wobei unter den vorherrschenden Bedingungen ein (kristallines) Chlorid entsteht, man dieses Salz von der flüssigen, löse- bzw. extraktionsmittelhaltigen Phase abtrennt, vorzugsweise durch Filtration oder mittels Zentrifuge, und den Behandlungsschritt einmal oder mehrmals wiederholt.

Dabei bevorzugt man als starke Base Ammoniak, ein primäres oder sekundäres Organoamin, vorzugsweise ein Organoamin der allgemeinen Formel II, insbesondere Methylamin oder Dimethylamin, ein Metallamid, vorzugsweise Lithiumdimethylamid, Natriumamid, Magnesium-bis(dimethylamid), ein Metallhydrid, vorzugsweise Lithiumhydrid, Natriumhydrid, Aluminiumhydrid, Lithiumaluminiumhydrid, und/oder ein Metallorganyl, vorzugsweise Methyllithium, Dimethylmagnesium, n-Butyllithium, t-Butyllithium, Phenyllithium. Die hier genannten Verbindungen können als Feststoff oder als Suspension in einem Kohlenwasserstoff oder als Lösung in einem im Wesentlichen inerten Lösemittel eingesetzt werden.

Im weiteren Verlauf der erfindungsgemäßen Nachbehandlungsstufe kann man im Anschluss an die Neutralisation zunächst die festen und anschließend die flüchtigen Bestandteile aus dem Filtrat bzw. Zentrifugat aus Schritt (v) entfernen und dabei von restlichem Chlorid im Wesentlichen befreites, kohlenstoffhaltiges Mono-, Oligo- und/oder Polyborosilazan als Produkt erhalten.

Eine solche Behandlung zur Minderung des Chloridgehalts im Polymer gemäß Schritt (v) kann man kontinuierlich oder diskontinuierlich durchführen.

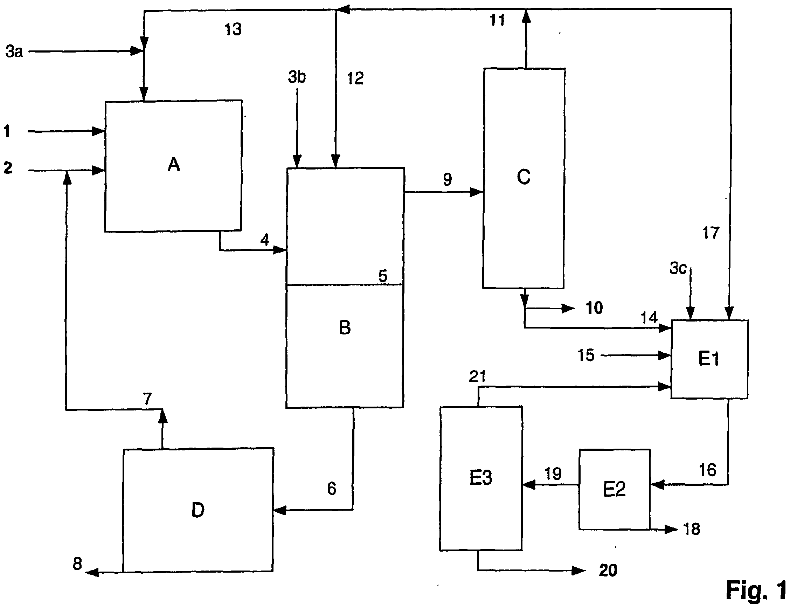

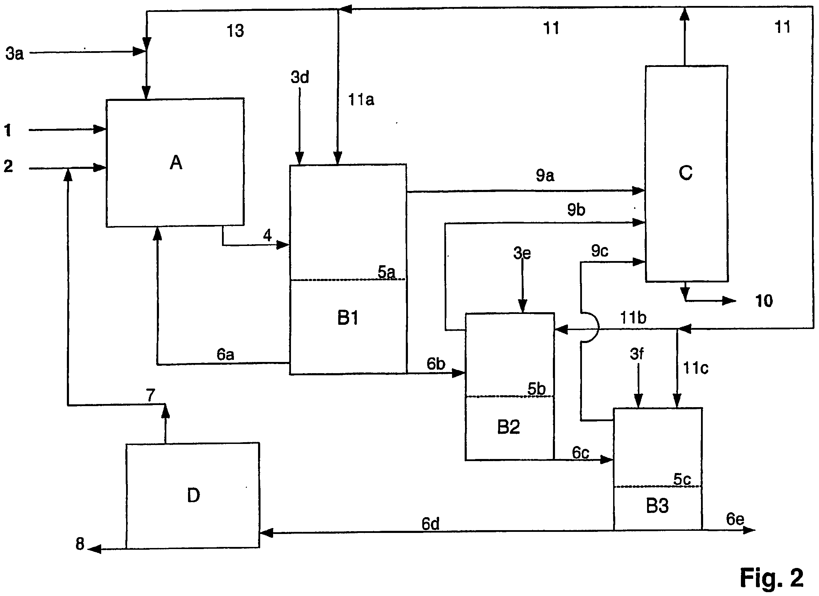

In den Figuren 1 und 2 sind Fließschemen bevorzugter Ausführungsformen der vorliegenden Erfindung dargestellt.

Somit ist ebenfalls Gegenstand der vorliegenden Erfindung eine Vorrichtung zur kontinuierlichen Herstellung von kohlenstoffhaltigen Polyborosilazanen basierend auf
- einem Rührkessel (A) für die Durchführung der Aminolyse (i) einschließlich Eduktaufgabe- bzw. Dosiereinheiten (1, 2),
- einer Misch- und Trenneinheit (B) für die Durchführung der Extraktion (ii) einschließlich einer Einheit (4) zur kontinuierlichen Überführung von Reaktionsgemisch aus (A) nach (B), einer Einheit (9) zur kontinuierlichen Überführung von in der Lösemittelphase gelöstem Produkt von (B) nach (C) und einer Einheit (6) zur Abführung der ammoniak- bzw. aminhaltigen Phase aus (B) und
- einer Destillationseinheit (C) für die Abtrennung des Lösemittels aus dem Produktgemisch einschließlich einer Einheit (11) zur Abführung des Lösemittels und einer Einheit (10), über die Produkt entnommen wird,
   wobei eine Einheit (D), die über Einheit (6) mit (B) verbunden ist, wobei in (D) Feststoffe abgeschieden und abgeführt werden (8) und Ammoniak oder Organoamin in die Gasphase überführt, kondensiert und anschließend über Einheit (7) gegebenenfalls über (2) nach (A) zurückgeführt werden.

Vorteilhaft beinhaltet die erfindungsgemäße Vorrichtung eine Einheit (D), die über Einheit (6) mit (B) verbunden ist, wobei in (D) Feststoffe, insbesondere Aminhydrochlorid, abgeschieden und abgeführt werden (8) und Ammoniak oder Organoamin in die Gasphase überführt, kondensiert und anschließend über Einheit (7) gegebenenfalls über (2) nach (A) zurückgeführt, d.h. recycliert werden kann.

Darüber hinaus kann man bei der erfindungsgemäßen Vorrichtung vorteilhaft eine Rückführung von Löse- bzw. Extraktionsmittel aus (C) über die Einheiten (11), (12) und/oder (13) in die Einheiten (A) und/oder (B) vorsehen.

Besonders vorteilhaft kann man bei der erfindungsgemäßen Vorrichtung eine Nachbehandlung für Polymer, vgl. Schritt (v) des erfindungsgemäßen Verfahrens, d.h. eine Reinigungsstufe (E) zur Entfernung von Halogenidanteilen aus einem Gemisch kohlenstoffhaltiger Polyborosilazane, vorsehen, wobei (E) auf einer Löse- und Neutralisabonseinheit (E1) mit Zuführungen für das zu reinigende Borosilazangemisch (14), für das Neutralisationsmittel und mindestens eine Zuführung für das Lösemittel (3c, 17, 21), einer nachfolgenden Einheit (E2) für die Abtrennung von Salz- und gegebenenfalls Amin- bzw. Ammoniakanteilen (18) und einer sich daran anschließenden Einheit (E3) für die Abtrennung des Lösemittels vom Produktstrom (20) basiert.

Eine solche Vorrichtung bzw. Anlage kann im Wesentlichen aus an sich bekannten, im Handel erhältlichen Geräten und Bauteilen, wie beheizbare bzw. kühlbare Reaktoren bzw. Kessel, Rührer, Extraktionen, Destillationskolonnen, Filter bzw. Zentrifugen, Rohrleitungen, Pumpen bzw. Produktfördergeräte für flüssige bis viskose bzw. feste Stoffe, Überwachungs-, Dosier-, Steuersowie Regeleinheiten, erstellt werden. Die Teile können dabei beständig gegenüber Druck und Korrosionseinflüsse ausgeführt sein.

Daher ist ebenfalls Gegenstand der vorliegenden Erfindung die Verwendung einer erfindungsgemäßen Vorrichtung für die Erzeugung einer Zusammensetzung, die im Wesentlichen monomere, oligomere und/oder polymere, kohlenstoffhaltige Borosilazane und einen Anteil an monomeren, oligomeren und/oder polymeren, halogen- und kohlenstoffhaltigen Borosilazanen, gerechnet als Halogenid, von 0,01 Gew-ppm bis 0,1 Gew.-%, vorzugsweise von 0,1 Gew.-ppm bis 0,05 Gew.%, besonders bevorzugt von 1 Gew-ppm bis 0,01 Gew.-%, ganz besonders bevorzugt von 10 Gew.-ppm bis 0,005 Gew. %, insbesondere von 50 Gew.-ppm bis 0,001 Gew.-%, enthält.

Ferner wird eine Zusammensetzung beschrieben, die im Wesentlichen monomere, oligomere und/oder polymere, kohlenstoffhaltige Borosilazane und einen Anteil an monomeren, oligomeren und/oder polymeren, halogen- und kohlenstoffhaltigen Borosilazanen, gerechnet als Halogenid, von 0,01 Gew.-ppm bis 0,1 Gew.-% enthält.

Im Allgemeinen führt man das erfindungsgemäße Verfahren zur Gewinnung von Polymer bzw. von besonders chloridarmem Polymer wie folgt aus:
In einem Rührkessel oder Reaktor (A) kann man die Edukte Ammoniak oder Organoamin (2) und die Einkomponentenvorläuferverbindung (1), vgl. u.a. Formeln Ia bis Id, umsetzen (Aminolyse). Dabei kann auch Lösemittel zugesetzt werden (3a, 13). In der Regel überführt man bei einer kontinuierlichen Fahrweise mengenmäßig so viel Reaktionsgemisch aus (A) über die Fördereinheit (4) in die kontinuierlich betriebene Extraktionsstufe (B bzw. B1), wie man an Edukt (1, 2, 3a, 13) zuführt. In der Extraktion bzw. den Extraktionsstufen (B bzw. B1, B2, B3) können weitere Mengen an Lösemittel (3b, 12 bzw. 3d, 3e, 3f, 11a, 11b, 11c) zugeführt werden. Die kontinuierliche Extraktion kann mehrstufig ausgeführt sein (B1, B2, B3).

In einer Ruhephase bzw. einem Ruhebereich der Extraktionseinheit (B bzw. B1, B2, B3) bildet sich eine Phasengrenze (5 bzw. 5a, 5b, 5c) aus, wobei die obere lösemittelhaltige Phase das Produkt in gelöster Form enthält. Die untere Phase enthält überschüssiges Amin bzw. Ammoniak sowie Aminhydrochlorid bzw. Ammoniumchlorid, was zumindest anteilig abgeführt wird. Ferner wird eine Menge der oberen lösemittelhaltigen Phase in die Destillationseinheit (C) überführt (vgl. Fördereinheiten 9 bzw. 9a, 9b, 9c). Dabei halten sich die aus der Extraktionseinheit zugeführten und die daraus entnommenen Mengen in der Regel die Waage.

Die aus der Extraktion abgeführte amin- bzw. ammoniakhaltige Phase kann verworfen werden. Man kann sie aber auch zumindest anteilig nach (A) zurückführen (6a), um das im Überschuss eingesetzte Amin bzw. Ammoniak wirtschaftlich nutzen zu können. Vorteilhaft kann man aber auch die amin- bzw. ammoniakhaltige Phase - zumindest anteilig - in eine Aufarbeitungseinheit (D) überführen (6 bzw. 6d), wo zunächst die Abtrennung von festen Salzanteilen erfolgen kann, beispielsweise durch Filtration (8). Geeigneterweise kann man das Filtrat destillieren, wobei man das Kopfprodukt vorteilhaft recycliert (7) und von Zeit zu Zeit den Salzanteil aus dem Sumpf ausschleust (8).

Die lösemittelhaltige Produktphase kann man kontinuierlich in die Destillationseinheit (C) überführen und dort in recyclierbares Lösemittel (11) und Polymer (10), d.h. Produkt auftrennen. Dabei stellt das Produkt in der Regel eine Zusammensetzung dar, die monomere, oligomere und/oder polymere, kohlenstoffhaltige Borosilazane und einen noch deutlichen Anteil an monomeren, oligomeren und/oder polymeren, halogenund kohlenstoffhaltigen Borosilazanen enthält.

Um eine Produktzusammensetzung mit einem möglichst niedrigen Anteil an halogenhaltigem Polymer bereitstellen zu können, kann man im Rahmen des vorliegenden Verfahrens oder auch gesondert das Polymer (10 oder 14) in einem Lösemittel lösen (E1), eine starke Base (15) zur Neutralisation bzw. zum Binden von vorliegendem Halogenid zusetzen und das Reaktionsgemisch zur Abtrennung von dabei entstandenem Salz (18) in eine Trenneinheit (E2) überführen (16). Die Flüssigphase kann nun aus (E2) nach (E3), einer Destillationseinheit geleitet und dort in recyclierbares Kopfprodukt (21) und vorteilhaft nachbehandeltes, besonders halogenidarmes Polymer (20) überführt werden. Der Nachbehandlungsschritt kann vorteilhaft kontinuierlich durchgeführt werden.

Beschriebene Zusammensetzungen, d.h. Polymergemische mit einem Anteil von halogenhaltigem Polymer von weniger als 0,1 Gew.-%, gerechnet als Halogenid, insbesondere Chlorid (Cl⁻), können nach dem erfindungsgemäßen kontinuierlichen Verfahren unter Einsatz einer erfindungsgemäßen Vorrichtung vergleichsweise einfach, wirtschaftlich und somit vorteilhaft für die Weiterverarbeitung zu Si/B/N/C basierenden Produkten der Sonderkeramik bereitgestellt werden.

## Patentansprüche

1. Verfahren zur Herstellung von kohlenstoffhaltigen Mono-, Oligo- und/oder Polyborosilazanen,
wobei man
(i) in einem Aminolyseschritt eine Einkomponentenvorläuferverbindung mit Ammoniak oder einem organischen Amin umsetzt,
(ii) Reaktionsgemisch aus der Aminolyse in einem kontinuierlich betriebenen Extraktionsschritt mindestens einmal mit einem organischen Lösemittel extrahiert,
(iii) bei der Extraktion anfallende ammoniak- bzw. organoaminhaltige Phase verwirft, aufarbeitet oder zumindest anteilig zurückführt,
(iv) aus der lösemittelhaltigen Phase der Extraktion kohlenstoffhaltige Mono-, Oligo- und/oder Polyborosilazane gewinnt und
(v) das in Schritt (iv) erhaltene kohlenstoffhaltige monomere, oligomere und/oder polymere Borosilazan in einem Lösemittel löst und dieser Lösung oder, im Sinne von Schritt (iv), der aus der Extraktion (ii) stammenden, lösemittelhaltigen Phase eine starke Base zusetzt, wobei unter den vorherrschenden Bedingungen ein (kristallines) Chlorid entsteht, man dieses Salz von der flüssigen, löse- bzw. extraktionsmittelhaltigen Phase abtrennt und den Behandlungsschritt einmal oder mehrmals wiederholt.

2. Verfahren nach Anspruch 1,
**dadurch gekennzeichnet,**
**dass** man in Schritt (i) ein Silylaminohalogenboran der allgemeinen Formel la
X₍₃₋ₙ₎RₙSi-(NR¹)-BRₘX'₍₂₋ₘ₎ (Ia),
worin Gruppen R gleich oder verschieden sind und R einen linearen, verzweigten oder cyclischen Kohlenwasserstoffrest mit 1 bis 20 C-Atomen darstellt, R¹ für ein Wasserstoffatom oder einen linearen, verzweigten oder cyclischen Kohlenwasserstoffrest mit 1 bis 20 C-Atomen steht, Gruppen X und X' gleich oder verschieden sind und X sowie X' für H, F, Cl, Br, J, eine Alkylaminogruppe oder eine Alkoxygruppe stehen und n sowie m unabhängig voneinander die Zahlenwerte 0, 1 oder 2 annehmen können,
oder ein Silylalkylhalogenboran der allgemeinen Formel Ib
X₍₃₋ₙ)RₙSi-[C(R⁴)₂]ₚ-BRₘX'₍₂₋ₘ₎ (Ib)
worin Gruppen R gleich oder verschieden sind und R einen linearen, verzweigten oder cyclischen Kohlenwasserstoffrest mit 1 bis 20 C-Atomen darstellt, R⁴ unabhängig für ein Wasserstoffatom oder einen linearen, verzweigten oder cyclischen Kohlenwasserstoffrest mit 1 bis 20 C-Atomen steht, p den Zahlenwert 1, 2 oder 3 annehmen kann, Gruppen X sowie X' gleich oder verschieden sind und X sowie X' für H, F, Cl, Br, J, eine Alkylaminogruppe oder eine Alkoxygruppe stehen und n sowie m unabhängig voneinander die Zahlenwerte 0, 1 oder 2 annehmen können,
oder ein Silylaminoborazin der allgemeinen Formel Ic 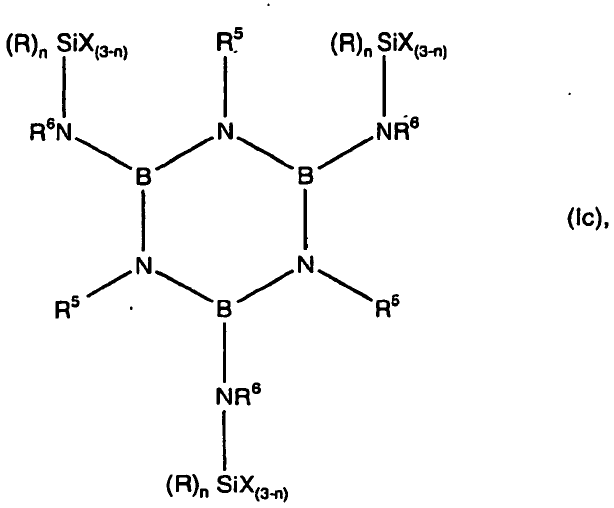 worin Gruppen R gleich oder verschieden sind und R einen linearen, verzweigten oder cyclischen Kohlenwasserstoffrest mit 1 bis 20 C-Atomen darstellt, Gruppen R⁵ sowie R⁶ gleich oder verschieden sind und R⁵ bzw. R⁶ für ein Wasserstoffatom oder einen linearen, verzweigten oder cyclischen Kohlenwasserstoffrest mit 1 bis 20 C-Atomen steht, Gruppen X gleich oder verschieden sind und X für H, F, Cl, Br, J, eine Alkylaminogruppe oder eine Alkoxygruppe steht und n unabhängig den Zahlenwert 0, 1 oder 2 annehmen kann,
oder ein Silylalkylborazin der allemeinen Formel Id 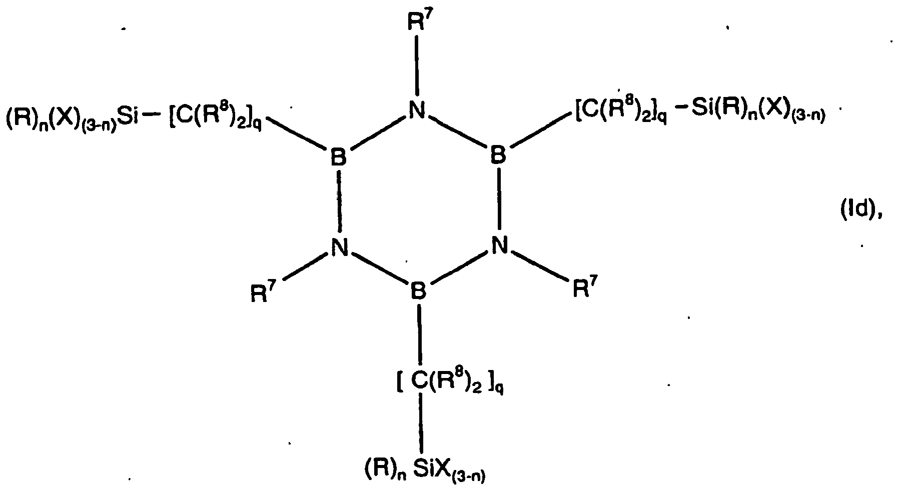 worin Gruppen R gleich oder verschieden sind und R einen linearen, verzweigten oder cyclischen Kohlenwasserstoffrest mit 1 bis 20 C-Atomen darstellt, R⁷ sowie R⁸ unabhängig für ein Wasserstoffatom oder einen linearen, verzweigten oder cyclischen Kohlenwasserstoffrest mit 1 bis 20 C-Atomen stehen, q unabhängig den Zahlenwert 1, 2 oder 3 annehmen kann, Gruppen X gleich oder verschieden sind und X für H, F, Cl, Br, J, eine Alkylaminogruppe oder eine Alkoxygruppe steht und n unabhängig den Zahlenwert 0, 1 oder 2 annehmen kann,
oder ein Gemisch aus mindestens zwei Verbindungen der Formeln 1a bis 1d
einsetzt.

3. Verfahren nach Anspruch 1 oder 2,
**dadurch gekennzeichnet,**
**dass** man in Schritt (i) eine Einkomponentenvorläuferverbindung aus der Reihe Trichlorsilylaminodichlorboran, Methyldichlorsilylaminodichlorboran, Dimethylchlorsilylaminodichlorboran, Trichlorsilylaminochlormethylboran, Methyldichlorsilylaminochlormethylboran, Dimethylchlorsilylaminochlormethylboran, Trichlorsilyl-dichlorboryl-methan, Methyldichlorsilyl-dichlorboryl-methan, Dimethylchlorsilyl-dichlorborylmethan, Trichlorsilyl-chlormethylboryl-methan, Methyldichlorsilylchlormethylboryl-methan, Dimethylchlorsilyl-chlormethylboryl-methan, B,B',B"-Tris(trichlorsilylamino)borazin, B,B',B"-Tris[dichlor(methyl)silylamino]borazin, B,B',B"-Tris[chlor(dimethyl)silylamino]borazin. B,B',B"-Tris(trichlorsilylmethyl)borazin, B,B',B"-Tris[dichlor(methyl)silylmethyl]borazin, B,B',B"-Tris[chlor(dimethyl)silylmethyl]borazin oder ein Gemisch aus mindestens zwei der zuvor genannten Verbindungen einsetzt.

4. Verfahren nach einem der Ansprüche 1 bis 3,
**dadurch gekennzeichnet,**
**dass** man in Schritt (i) Ammoniak oder ein primäres oder sekundäres Organoamin der allgemeinen Formel II
R⁹_{y}NH_{(3-y)} (II),
worin Gruppen R⁹ gleich oder verschieden sind und R⁹ einen linearen, verzweigten oder cyclischen Kohlenwasserstoffrest mit 1 bis 20 C-Atomen darstellt und y die Zahlenwerte 1 oder 2 annehmen kann,
oder ein Gemisch aus mindestens zwei der zuvor genannten Komponenten einsetzt.

5. Verfahren nach Anspruch 4,
**dadurch gekennzeichnet,**
**dass** man in Schritt (i) flüssigen Ammoniak oder ein primäres oder sekundäres Organoamin aus der Reihe Methylamin, Ethylamin, Dimethylamin oder Diethylamin oder ein Gemisch aus mindestens zwei der zuvor genannten Verbindungen einsetzt.

6. Verfahren nach einem der Ansprüche 1 bis 5,
**dadurch gekennzeichnet,**
**dass** man in Schritt (i) den Ammoniak bzw. das Organoamin im Überschuss einsetzt.

7. Verfahren nach einem der Ansprüche 1 bis 6,
**dadurch gekennzeichnet,**
**dass** man die Aminolyse (i) bei einer Temperatur im Bereich von -50 bis +80 °C sowie einem Druck von 0,1 bis 40 bar abs. durchführt.

8. Verfahren nach einem der Ansprüche 1 bis 7,
**dadurch gekennzeichnet,**
**dass** man die Aminolyse (i) einphasig durchführt.

9. Verfahren nach einem der Ansprüche 1 bis 8,
**dadurch gekennzeichnet,**
**dass** man die Aminolyse (i) in Gegenwart eines Lösemittels durchführt.

10. Verfahren nach einem der Ansprüche 1 bis 9,
**dadurch gekennzeichnet,**
**dass** man bei der Aminolyse (i) als Lösemittel einen Stoff oder ein Stoffgemisch aus der Reihe der C₃- bis C₉-Kohtenwasserstoffe einsetzt.

11. Verfahren nach einem der Ansprüche 1 bis 10,
**dadurch gekennzeichnet,**
**dass** man den Schritt (i) kontinuierlich durchführt, wobei man dem Reaktionsgemisch so viel an Einsatzstoffen zuführt, wie man an Reaktionsgemisch aus Schritt (i) entnimmt und dem Schritt (ii) zuführt.

12. Verfahren nach einem der Ansprüche 1 bis 11,
**dadurch gekennzeichnet,**
**dass** man bei der Extraktion (ii) als Lösemittel einen Stoff oder ein Stoffgemisch aus der Reihe der C₃- bis C₉-Kohtenwasserstoffe einsetzt.

13. Verfahren nach einem der Ansprüche 1 bis 12,
**dadurch gekennzeichnet,**
**dass** man ein Lösemittel aus der Reihe n-Butan, i-Butan, n-Pentan, i-Pentan, n-Hexan, Cyclohexan, n-Octan, i-Octan, Waschbenzin, Toluol, Xylol oder ein Gemisch aus mindestens zwei der zuvor genannten Stoffe verwendet.

14. Verfahren nach einem der Ansprüche 1 bis 13,
**dadurch gekennzeichnet,**
**dass** man in Schritt (ii) den Anteil von Lösemittel und vorliegendem Ammoniak bzw. Organoamin auf ein Volumenverhältnis von 20 : 1 bis 1 : 20 einstellt.

15. Verfahren nach einem der Ansprüche 1 bis 14,
**dadurch gekennzeichnet,**
**dass** man die Extraktion (ii) bei einer Temperatur im Bereich zwischen -50 °C und dem Siedepunkt des eingesetzten Lösemittels oder Organoamins betreibt.

16. Verfahren nach einem der Ansprüche 1 bis 15,
**dadurch gekennzeichnet,**
**dass** man in der Extraktion (ii) das Extraktionsgemisch in eine lösemittelhaltige Phase und eine ammoniak- bzw. organoaminhaltige Phase auftrennt.

17. Verfahren nach einem der Ansprüche 1 bis 16,
**dadurch gekennzeichnet,**
**dass** man bei der Extraktion (ii) die in der vorangehenden Extraktionsstufe abgetrennten ammoniak- bzw. organoaminhaltigen Phase nochmals mit einem Lösemittel extrahiert.

18. Verfahren nach einem der Ansprüche 1 bis 17,
**dadurch gekennzeichnet,**
**dass** die Extraktion (ii) mindestens eine bis sechs Extraktionsstufe(n) beinhaltet.

19. Verfahren nach einem der Ansprüche 1 bis 18,
**dadurch gekennzeichnet,**
**dass** man in Schritt (iii) die ammoniak- bzw. organoaminhaltige Phase aus der Extraktion (ii) zumindest anteilig in die Aminolyse (i) zurückführt oder die ammoniak- bzw. organoaminhaltige Phase aus der Extraktion (ii) destilliert und das so zurückgewonnene Organoamin bzw. den Ammoniak wieder verwertet.

20. Verfahren nach einem der Ansprüche 1 bis 19,
**dadurch gekennzeichnet,**
**dass** man in Schritt (iv) das Lösemittel aus der in Schritt (ii) anfallenden lösemittelhaltigen Phase durch Destillation abtrennt, gegebenenfalls aufreinigt und wieder der Aminolyse (i) und/oder der Extraktion (ii) zuführt und das erhaltene kohlenstoffhaltige Borosilazan gegebenenfalls nachbehandelt.

21. Verfahren nach Anspruch 1 bis 20,
**dadurch gekennzeichnet,**
**dass** man als starke Base Ammoniak, ein primäres oder sekundäres Organoamin, ein Metallamid, Metallhydrid und/oder ein Metallorganyl einsetzt.

22. Verfahren nach Anspruch 1 bis 21,
**dadurch gekennzeichnet,**
**dass** man die zunächst die festen und anschließend die flüchtigen Bestandteile aus dem Filtrat bzw. Zentrifugat aus Schritt (v) entfernt und dabei von restlichem Chlorid im Wesentlichen befreites, kohlenstoffhaltiges monomeres, oligomeres und/oder polymeres Borosilazan als Produkt erhält.

23. Verfahren nach einem der Ansprüche 1 bis 22,
**dadurch gekennzeichnet,**
**dass** man Schritt (v) kontinuierlich oder diskontinuierlich durchführt.

24. Vorrichtung zur kontinuierlichen Herstellung von kohlenstoffhaltigen Mono-, Oligo- und/oder Polyborosilazanen basierend auf
- einem Rührkessel (A) für die Durchführung der Aminolyse (i) einschließlich Eduktaufgabe- bzw. Dosiereinheiten (1, 2),
- einer Misch- und Trenneinheit (B) für die Durchführung der Extraktion (ii) einschließlich einer Einheit (4) zur kontinuierlichen Überführung von Reaktionsgemisch aus (A) nach (B), einer Einheit (9) zur kontinuierlichen Überführung von in der Lösemittelphase gelöstem Produkt von (B) nach (C) und einer Einheit (6) zur Abführung der ammoniak- bzw. aminhaltigen Phase aus (B) und
- einer Destillationseinheit (C) für die Abtrennung des Lösemittels aus dem Produktgemisch einschließlich einer Einheit (11) zur Abführung des Lösemittels und einer Einheit (10), über die Produkt entnommen wird,
wobei eine Einheit (D), die über Einheit (6) mit (B) verbunden ist, wobei in (D) Feststoffe abgeschieden und abgeführt werden (8) und Ammoniak oder Organoamin in die Gasphase überführt, kondensiert und anschließend über Einheit (7) gegebenenfalls über (2) nach (A) zurückgeführt werden.

25. Vorrichtung nach Anspruch 24,
**gekennzeichnet durch**
eine Rückführung von Lösemittel aus (C) über die Einheiten (11), (12) und/oder (13) in die Einheiten (A) und/oder (B).

26. Vorrichtung nach einem der Ansprüche 24 oder 25,
**gekennzeichnet durch**
eine Reinigungsstufe (E) zur Entfernung von Halogenidanteilen aus einem Gemisch kohlenstoffhaltiger Mono-, Oligo- und/oder Polyborosilazane, wobei (E) auf einer Löse- und Neutralisationseinheit (E1) mit Zuführungen für das zu reinigenden Borosilazangemisch (14), für das Neutralisationsmittel und mindestens eine Zuführung für das Lösemittel (3c, 17, 21), einer nachfolgenden Einheit (E2) für die Abtrennung von Salz- und ggf. Amin- bzw. Ammoniakanteilen (18) und einer sich daran anschließenden Einheit (E3) für die Abtrennung des Lösemittels vom Produktstrom (20) basiert.

27. Verwendung einer Vorrichtung nach einem der Ansprüche 24 bis 26 für die Erzeugung einer Zusammensetzung, die im Wesentlichen monomere, oligomere und/oder polymere, kohlenstoffhaltige Borosilazane und einen Anteil an monomeren, oligomeren und/oder polymeren, halogen- und kohlenstoffhaltigen Borosilazanen, gerechnet als Halogenid, von 0,01 Gew.-ppm bis 0,1 Gew.-% enthält.

## Claims

1. Process for preparing carbon-containing monoborosilazanes, oligoborosilazanes and/or polyborosilazanes, which comprises
(i) reacting a single-component precursor compound with ammonia or an organic amine in an aminolysis step,
(ii) extracting reaction mixture from the aminolysis at least once with an organic solvent in a continuously operated extraction step,
(iii) discarding, working up or at least partly recirculating ammonia- or organoamine-containing phase obtained in the extraction,
(iv) isolating carbon-containing monoborosilazanes, oligoborosilazanes and/or polyborosilazanes from the solvent-containing phase from the extraction and
(v) dissolving the carbon-containing monomeric, oligomeric and/or polymeric borosilazane obtained in step (iv) in a solvent and adding a strong base to this solution or, in the sense of step (iv), the solvent-containing phase from the extraction (ii) to form a (crystalline) chloride under the prevailing conditions, separating this salt off from the liquid, solvent- or extractant-containing phase and repeating the treatment step one or more times.

2. Process according to Claim 1, **characterized in that** a silylaminohaloborane of the general formula Ia
X₍₃₋ₙ₎RₙSi- (NR¹) -BRₘX'₍₂₋ₘ₎ (Ia)
where groups R are identical or different and R is a linear, branched or cyclic hydrocarbon radical having from 1 to 20 carbon atoms, R¹ is a hydrogen atom or a linear, branched or cyclic hydrocarbon radical having from 1 to 20 carbon atoms, groups X and X' are identical or different and X and X' are each H, F, Cl, Br, I, an alkylamino group or an alkoxy group and n and m can, independently of one another, each be 0, 1 or 2,
or a silylalkylhaloborane of the general formula Ib
X₍₃₋ₙ₎RₙSi-[C(R⁴)₂]ₚ-BRₘX' ₍₂₋ₘ₎ (Ib)
where groups R are identical or different and R is a linear, branched or cyclic hydrocarbon radical having from 1 to 20 carbon atoms, groups R⁴ are each, independently of one another, a hydrogen atom or a linear, branched or cyclic hydrocarbon radical having from 1 to 20 carbon atoms, p can be 1, 2 or 3, groups X and X' are identical or different and X and X' are each H, F, Cl, Br, I, an alkylamino group or an alkoxy group and n and m can, independently of one another, each be 0, 1 or 2,
or a silylaminoborazine of the general formula Ic 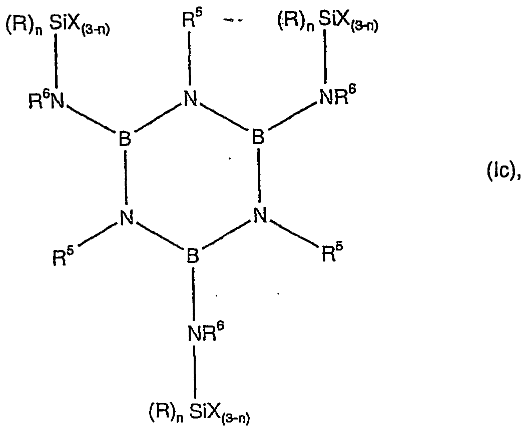 where groups R are identical or different and R is a linear, branched or cyclic hydrocarbon radical having from 1 to 20 carbon atoms, groups R⁵ and R⁶ are identical or different and R⁵ and R⁶ are each a hydrogen atom or a linear, branched or cyclic hydrocarbon radical having from 1 to 20 carbon atoms, groups X are identical or different and X is H, F, Cl, Br, I, an alkylamino group or an alkoxy group and n can independently be 0, 1 or 2,
or a silylalkylborazine of the general formula Id 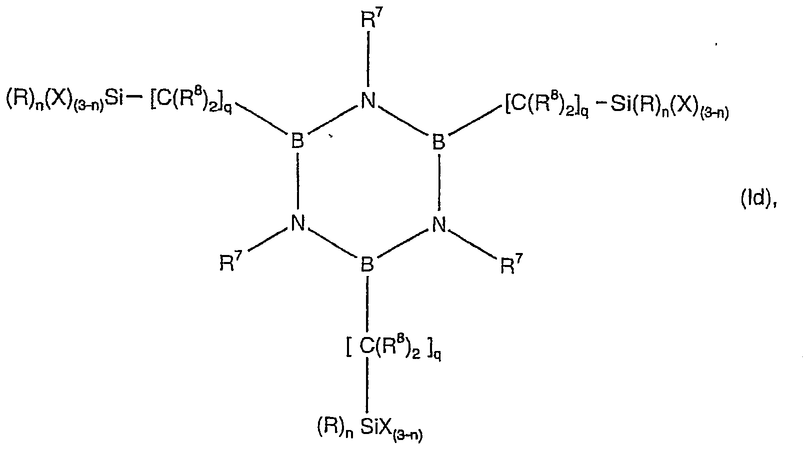 where groups R are identical or different and R is a linear, branched or cyclic hydrocarbon radical having from 1 to 20 carbon atoms, R⁷ and R⁸ are each, independently of one another, a hydrogen atom or a linear, branched or cyclic hydrocarbon radical having from 1 to 20 carbon atoms, q can independently be 1, 2 or 3, groups X are identical or different and X is H, F, Cl, Br, I, an alkylamino group or an alkoxy group and n can independently be, 0, 1 or 2,
or a mixture of at least two compounds of the formulae Ia to Id
is used in step (i).

3. Process according to Claim 1 or 2, **characterized in that** a single-component precursor compound selected from the group consisting of trichlorosilylaminodichloroborane, methyldichlorosilylaminodichloroborane, dimethylchlorosilylaminodichloroborane, trichlorosilylaminochloromethylborane, methyldichlorosilylaminochloromethylborane, dimethylchlorosilylaminochloromethylborane, trichlorosilyldichloroborylmethane, methyldichlorosilyldichloroborylmethane, dimethylchlorosilyldichloroborylmethane, trichlorosilylchloromethylborylmethane, methyldichlorosilylchloromethylborylmethane, dimethylchlorosilylchloromethylborylmethane, B,B',B"-tris(trichlorosilylamino)borazine, B,B',B"-tris[dichloro-(methyl) silylamino] borazine, B,B',B"-tris[chloro-(dimethyl)silylamino]borazine, B,B',B"-tris(trichlorosilylmethyl)borazine, B,B',B"-tris[dichloro-(methyl)silylmethyl]borazine, B,B',B"-tris[chloro-(dimethyl)silylmethyl]borazine or a mixture of at least two of the abovementioned compounds is used in step (i).

4. Process according to any of Claims 1 to 3, **characterized in that** ammonia or a primary or secondary organoamine of the general formula II
R⁹_{y}NH_{(3-y)} (II),
where groups R⁹ are identical or different and R⁹ is a linear, branched or cyclic hydrocarbon radical having from 1 to 20 carbon atoms and y can be 1 or 2,
or a mixture of at least two of the abovementioned components is used in step (i).

5. Process according to Claim 4, **characterized in that** liquid ammonia or a primary or secondary organoamine selected from the group consisting of methylamine, ethylamine, dimethylamine and diethylamine or a mixture of at least two of the abovementioned compounds is used in step (i).

6. Process according to any of Claims 1 to 5, **characterized in that** the ammonia or the organoamine is used in excess in step (i).

7. Process according to any of Claims 1 to 6, **characterized in that** the aminolysis (i) is carried out at a temperature in the range from -50 to +80°C and a pressure of from 0.1 to 40 bar abs.

8. Process according to any of Claims 1 to 7, **characterized in that** the aminolysis (i) is carried out in a single phase.

9. Process according to any of Claims 1 to 8, **characterized in that** the aminolysis (i) is carried out in the presence of a solvent.

10. Process according to any of Claims 1 to 9, **characterized in that** a substance or mixture of substances selected from the group consisting of C₃-C₉-hydrocarbons is used as solvent in the aminolysis (i).

11. Process according to any of Claims 1 to 10, **characterized in that** step (i) is carried out continuously, with starting materials being fed to the reaction mixture in an amount corresponding to the amount of reaction mixture being taken off from step (i) and fed to step (ii).

12. Process according to any of Claims 1 to 11, **characterized in that** a substance or mixture of substances selected from the group consisting of C₃-C₉-hydrocarbons is used as solvent in the extraction (ii).

13. Process according to any of claims 1 to 12, **characterized in that** a solvent selected from the group consisting of n-butane, i-butane, n-pentane, i-pentane, n-hexane, cyclohexane, n-octane, i-octane, petroleum spirit, toluene, xylene and mixtures of at least two of the abovementioned substances is used.

14. Process according to any of Claims 1 to 13, **characterized in that** the proportion of solvent and ammonia or organoamine present in step (ii) is set to a volume ratio of from 20:1 to 1:20.

15. Process according to any of Claims 1 to 14, **characterized in that** the extraction (ii) is operated at a temperature in the range from -50°C to the boiling point of the solvent or organoamine used.

16. Process according to any of Claims 1 to 15, **characterized in that**, in the extraction (ii), the extraction mixture is separated into a solvent-containing phase and an ammonia- or organoamine-containing phase.

17. Process according to any of Claims 1 to 16, **characterized in that**, in the extraction (ii), the ammonia- or organoamine-containing phase separated off in the preceding extraction stage is extracted once more with a solvent.

18. Process according to any of Claims 1 to 17, **characterized in that** the extraction (ii) comprises from at least one to six extraction stage(s).

19. Process according to any of Claims 1 to 18, **characterized in that**, in step (iii), at least part of the ammonia- or organoamine-containing phase from the extraction (ii) is recirculated to the aminolysis (i) or the ammonia- or organoamine-containing phase from the extraction (ii) is distilled and the organoamine or ammonia recovered in this way is reused.

20. Process according to any of Claims 1 to 19, **characterized in that**, in step (iv), the solvent is separated off by distillation from the solvent-containing phase obtained in step (ii), if appropriate purified and recirculated to the aminolysis (i) and/or the extraction (ii) and the carbon-containing borosilazane obtained is aftertreated if appropriate.

21. Process according to Claims 1 to 20, **characterized in that** ammonia, a primary or secondary organoamine, a metal amide, metal hydride and/or a metal organyl is used as strong base.

22. Process according to Claims 1 to 21, **characterized in that** firstly the solid and subsequently the volatile constituents are removed from the filtrate or centrifugate from step (v) and carbon-containing monomeric, oligomeric and/or polymeric borosilazane which has been essentially freed of residual chloride is obtained as product.

23. Process according to any of Claims 1 to 22, **characterized in that** step (v) is carried out continuously or batchwise.

24. Apparatus for the continuous preparation of carbon-containing monoborosilazanes, oligoborosilazanes and/or polyborosilazanes which is based on
- a stirred vessel (A) for carrying out the aminolysis (i) including units (1, 2) for introducing or metering-in starting materials,
- a mixing and separation unit (B) for carrying out the extraction (ii) including a unit (4) for the continuous transfer of reaction mixture from (A) to (B), a unit (9) for the continuous transfer of product dissolved in the solvent phase from (B) to (C) and a unit (6) for the discharge of the ammonia- or amine-containing phase from (B) and
- a distillation unit (C) for the separation of the solvent from the product mixture including a unit (11) for the discharge of the solvent and a unit (10) via which the product is taken off, **characterized by** a unit (D) which is connected via unit (6) to (B); in (D), solids being separated off and discharged (8) and ammonia or organoamine being brought into the gas phase, condensed and subsequently recirculated via unit (7), if appropriate via (2), to (A).

25. Apparatus according to Claim 24, **characterized by** a facility for recirculating solvent from (C) via the units (11), (12) and/or (13) to the units (A) and/or (B).

26. Apparatus according to either of Claims 24 and 25, **characterized by** a purification stage (E) for removing halide from a mixture of carbon-containing monoborosilazanes, oligoborosilazanes and/or polyborosilazanes, with (E) being based on a dissolution and neutralization unit (E1) with feed lines for the borosilazane mixture to be purified (14), for the neutralizing agent and at least one feed line for the solvent (3c, 17, 21), a downstream unit (E2) for separating off salts and, if appropriate, amine or ammonia (18) and a subsequent unit (E3) for separating off the solvent from the product stream (20).

27. Use of an apparatus according to any of Claims 24 to 26 for producing a composition which comprises essentially monomeric, oligomeric and/or polymeric, carbon-containing borosilazanes and a proportion of monomeric, oligomeric and/or polymeric, halogen- and carbon-containing borosilazanes, calculated as halide, of from 0.01 ppm by weight to 0.1% by weight.

## Revendications

1. Procédé de production de mono-, oligo-, et/ou polyborosilazanes carbonés, dans lequel
(i) on fait réagir dans une étape d'aminolyse, un composé précurseur mono-composant avec de l'ammoniaque ou une amine organique,
(ii) le mélange réactionnel de l'aminolyse est extrait au moins une fois dans une étape d'extraction menée en continu avec un solvant organique,
(iii) on traite ou au moins recycle en partie la phase contenant de l'ammoniaque ou des organo-amines, obtenue lors de l'extraction,
(iv) on obtient à partir de la phase d'extraction contenant le solvant, des mono-, oligo- et/ou polyborosilazanes carbonés et
(v) on dissout le borosilazane monomère, oligomère et/ou polymère carboné obtenu à l'étape (iv) dans un solvant et on ajoute à cette solution ou, dans le sens de l'étape (iv) à la phase contenant le solvant provenant de l'extraction (ii), une base forte,
du chlorure (cristallin) se formant dans ces conditions, on sépare ce sel de la phase liquide contenant le solvant ou l'agent d'extraction et on répète une ou plusieurs fois l'étape de traitement.

2. Procédé selon la revendication 1,
**caractérisé en ce que**
l'on utilise à l'étape (i) un silylaminohalogénoborane de formule générale Ia
X₍₃₋ₙ₎RₙSi-(NR1)-BRₘX'₍₂₋ₘ₎ (Ia)
où les groupes R sont identiques ou différents et R désigne un radical hydrocarbure linéaire, ramifié ou cyclique comportant 1 à 20 atomes de carbone, R¹ désigne un atome d'hydrogène ou un radical hydrocarbure linéaire, ramifié ou cyclique comportant 1 à 20 atomes de carbone, les groupes X et X' sont identiques ou différents et X et X' désignent H, F, Cl, Br, I, un groupe alkylamino ou un groupe alcoxy et n et m peuvent prendre indépendamment l'un de l'autre les valeurs 0, 1 ou 2,
ou un silylhalogénoborane de formule générale Ib
X₍₃₋ₙ₎RₙSi-[C(R⁴)₂]ₚ-BRₘX'₍₂₋ₘ₎ (Ib)
où les groupes R sont identiques ou différents et R désigne un radical hydrocarbure linéaire, ramifié ou cyclique comportant 1 à 20 atomes de carbone, R⁴ désigne indépendamment un atome d'hydrogène ou un radical hydrocarbure linéaire, ramifié ou cyclique comportant 1 à 20 atomes de carbone, p peut prendre la valeur 1, 2 ou 3, les groupes X et X' sont identiques ou différents et X et X' désignent H, F, Cl, Br, I, un groupe alkylamino ou un groupe alcoxy et n et m peuvent prendre indépendamment l'un de l'autre les valeurs 0, 1 ou 2,
ou une silylaminoborazine de formule générale Ic 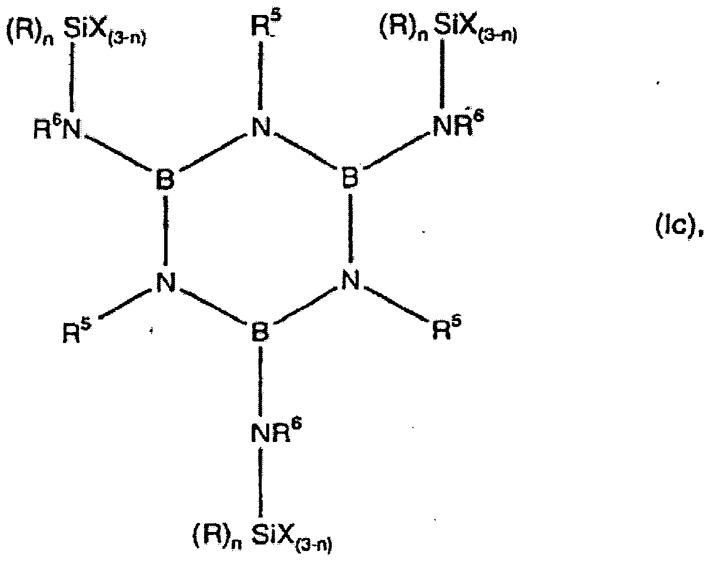 où les groupes R sont identiques ou différents et R désigne un radical hydrocarbure linéaire, ramifié ou cyclique comportant 1 à 20 atomes de carbone, les groupes R⁵ et R⁶ sont identiques ou différents et R⁵ ou R⁶ désigne indépendamment un atome d'hydrogène ou un radical hydrocarbure linéaire, ramifié ou cyclique comportant 1 à 20 atomes de carbone, les groupes X sont identiques ou différents et X désigne H, F, Cl, Br, I, un groupe alkylamino ou un groupe alcoxy et n peut prendre indépendamment les valeurs 0, 1 ou 2,
ou une silylalkylborazine de formule générale Id 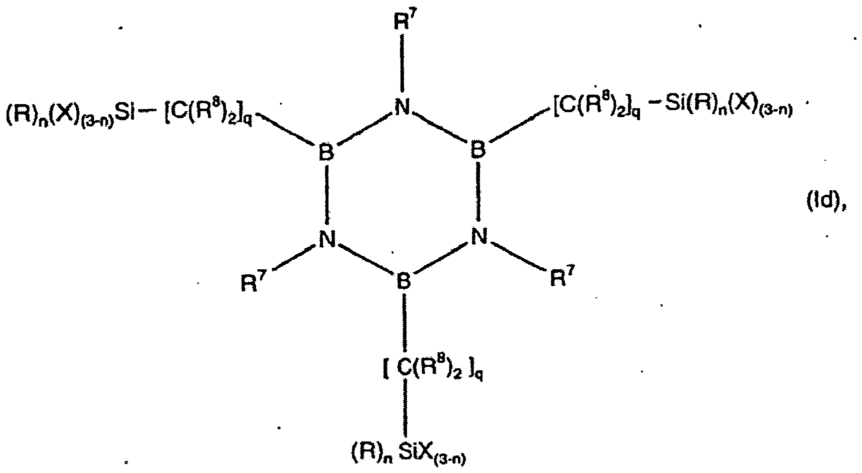 où les groupes R sont identiques ou différents et R désigne un radical hydrocarbure linéaire, ramifié ou cyclique comportant 1 à 20 atomes de carbone, les groupes R⁷ et R⁸ désignent indépendamment un atome d'hydrogène ou un radical hydrocarbure linéaire, ramifié ou cyclique comportant 1 à 20 atomes de carbone, q peut prendre indépendamment la valeur 1, 2 ou 3, les groupes X sont identiques ou différents et X désigne H, F, Cl, Br, I, un groupe alkylamino ou un groupe alcoxy et n peut prendre indépendamment les valeurs 0, 1 ou 2,
ou un mélange d'au moins deux composés de formule 1a à 1d.

3. Procédé selon la revendication 1 ou 2,
**caractérisé en ce que**
l'on utilise à l'étape (i) un composé précurseur mono-composant dans la série des trichlorosilylaminedichloroborane, méthyldichlorosilylaminodichloroborane, diméthylchlorosilylaminodichloroborane, trichlorosilylaminochlorométhylborane, méthyldichlorosilylaminochlorométhylborane, diméthylchlorosilylaminochlorométhylborane, trichlorosilyl-dichloroboryl-méthane, méthyldichlorosilyldichloroboryl-méthane, diméthylchlorosilyl-dichloroborylméthane, trichlorosilylchlorométhylborylméthane, méthyldichlorosilylchlorométhylboryl-méthane, diméthylchlorosilyl-chlorométhylboryl-méthane, B,B',B"-tris(trichlorosilylamino)borazine, B,B',B"-tris[dichloro(méthyl)silylamino]borazine, B,B',B"-tris[chloro(diméthyl)silylamino]borazine, B,B',B"-tris[trichlorosilylméthyl) borazine, B,B',B"-tris[dichloro(méthyl)silylméthyl]borazine, B,B',B"-tris[chloro(diméthyl)silylméthyl]borazine ou un mélange d'au moins deux des composés précédemment cités.

4. Procédé selon l'une des revendications 1 à 3,
**caractérisé en ce que**
l'on utilise à l'étape (i) de l'ammoniaque ou une organo-amine primaire ou secondaire de formule générale II
R⁹_{y}NH_{(3-y)} (II),
dans laquelle les groupes R⁹ sont identiques ou différents et R⁹ représente un radical hydrocarbure linéaire, ramifié ou cyclique comportant 1 à 20 atomes de carbone et y peut prendre les valeurs 1 ou 2,
ou un mélange d'au moins deux des composants mentionnés précédemment.

5. Procédé selon la revendication 4,
**caractérisé en ce que**
l'on utilise à l'étape (i) de l'ammoniaque liquide ou une organo-amine primaire ou secondaire de la série comprenant la méthylamine, l'éthylamine, la diméthylamine ou la diéthylamine ou un mélange d'au moins deux des composés précédemment cités.

6. Procédé selon l'une des revendications 1 à 5,
**caractérisé en ce que**
l'on utilise à l'étape (i) l'ammoniaque ou l'organo-amine en excédent.

7. Procédé selon l'une des revendications 1 à 6,
**caractérisé en ce que**
l'on réalise l'aminolyse (i) à une température de l'ordre de -50 à +80° C et à une pression de 0,1 à 40 bars abs.

8. Procédé selon l'une des revendications 1 à 7,
**caractérisé en ce que**
l'on réalise l'aminolyse (i) en une phase.

9. Procédé selon l'une des revendications 1 à 8,
**caractérisé en ce que**
l'on réalise l'aminolyse (i) en présence d'un solvant.

10. Procédé selon l'une des revendications 1 à 9,
**caractérisé en ce que**
l'on utilise comme solvant lors de l'aminolyse (i) une substance ou un mélange de substances de la série des hydrocarbures en C₃ à C₉.

11. Procédé selon l'une des revendications 1 à 10,
**caractérisé en ce que**
l'on réalise en continu l'étape (i) en introduisant dans le mélange réactionnel autant de substances de départ qu'on en enlève du mélange réactionnel à l'étape (i) et on l'ajoute à l'étape (ii).

12. Procédé selon l'une des revendications 1 à 11,
**caractérisé en ce que**
l'on utilise comme solvant lors de l'extraction (ii), une substance ou un mélange de substances de la série des hydrocarbures en C₃ à C₉.

13. Procédé selon l'une des revendications 1 à 12,
**caractérisé en ce que**
l'on utilise un solvant de la série des n-butane, i-butane, n-pentane, i-pentane, n-hexane, cyclohexane, n-octane i-octane, éther de pétrole, toluène, xylène ou un mélange d'au moins deux des substances mentionnées précédemment.

14. Procédé selon l'une des revendications 1 à 13,
**caractérisé en ce que**
l'on ajuste à l'étape (ii) la proportion de solvant et l'ammoniaque ou l'organo-amine présente en un rapport volumique de 20:1 à 1:20.

15. Procédé selon l'une des revendications 1 à 14,
**caractérisé en ce que**
l'on réalise l'extraction (ii) à une température dans une plage entre -50° C et le point d'ébullition du solvant ou de l'organo-amine utilisé(e).

16. Procédé selon l'une des revendications 1 à 15,
**caractérisé en ce que**
l'on sépare lors de l'extraction (ii) le mélange d'extraction en une phase contenant le solvant et une phase contenant l'ammoniaque ou l'organo-amine.

17. Procédé selon l'une des revendications 1 à 16,
**caractérisé en ce que**
l'on extrait une nouvelle fois lors de l'extraction (ii) la phase d'ammoniaque ou d'organo-amine séparée à l'étape d'extraction précédente avec un solvant.

18. Procédé selon l'une des revendications 1 à 17,
**caractérisé en ce que**
l'extraction (ii) comporte au moins une à six étape(s) d'extraction.

19. Procédé selon l'une des revendications 1 à 18
**caractérisé en ce que**
l'on réachemine à l'étape (iii) la phase contenant de l'ammoniaque ou l'organo-amine de l'extraction (ii) au moins partiellement dans l'aminolyse (i) ou on distille la phase contenant de l'ammoniaque ou l'organo-amine de l'extraction (ii) et l'organo-amine ou l'ammoniaque ainsi récupérée est revalorisée.

20. Procédé selon l'une des revendications 1 à 19,
**caractérisé en ce que**
l'on sépare à l'étape (iv) le solvant de la phase contenant le solvant obtenue à l'étape (ii) par distillation, la purifie éventuellement et la réachemine à l'aminolyse (i) et/ou à l'extraction (ii) et retraite éventuellement le borosilazane carboné obtenu.

21. Procédé selon la revendication 1 à 20,
**caractérisé en ce que**
l'on utilise comme base forte, de l'ammoniaque, une organo-amine primaire ou secondaire, un amide métallique, un hydrure métallique et/ou un organyle métallique.

22. Procédé selon la revendication 1 à 21,
**caractérisé en ce que**
l'on élimine tout d'abord du filtrat ou du centrifugeat, les composants solides et ensuite volatiles de l'étape (v) et ainsi, on obtient comme produit du borosilazane monomère, oligomère et/ou polymère carboné substantiellement dépourvu du chlorure résiduel.

23. Procédé selon l'une des revendications 1 à 22,
**caractérisé en ce que**
l'on réalise l'étape (v) de façon continue ou discontinue.

24. Dispositif de production continue de mono-, oligo-, et/ou polyborosilazanes carbonés comprenant :
- une cuve de mélange (A) pour la réalisation de l'aminolyse (i) comprenant des unités d'alimentation de produits de départ ou de dosage (1, 2),
- une unité de mélange et de séparation (B) pour la réalisation de l'extraction (ii) comprenant une unité (4) de transfert continu du mélange réactionnel des points (A) à (B), une unité (9) pour le transfert en continu du produit dissous dans la phase de solvant des points (B) à (C) et une unité (6) pour l'évacuation de la phase contenant de l'ammoniaque ou des amines du point (B) et
- une unité de distillation (C) pour la séparation du solvant du mélange de produit comprenant une unité (11) pour l'évacuation du solvant et une unité (10) par laquelle le produit est prélevé,
une unité (D) qui est reliée par l'unité (6) au point (B), des solides étant éliminés et évacués (8) au point (D), et l'ammoniaque ou l'organo-amine étant convertis en phase gazeuse, condensés et ensuite réacheminés par l'unité (7) éventuellement par le point (2) vers le point (A).

25. Dispositif selon la revendication 24,
**caractérisé par**
un réacheminement du solvant du point (C) par les unités (11), (12) et/ou (13) dans les unités (A) et/ou (B).

26. Dispositif selon l'une des revendications 24 ou 25,
**caractérisé par**
un plateau de purification (E) pour éliminer les fractions halogénures d'un mélange de mono, oligo-, et polyborosilazanes carbonés, (E) repose sur une unité de dissolution et de neutralisation (E1) avec des alimentations pour le mélange de borosilazane à purifier (14), pour l'agent de neutralisation et au moins une alimentation pour le solvant (3c, 17, 21), sur une unité suivante (E2) pour la séparation des fractions de sel et éventuellement d'amine ou d'ammoniaque (18) et une unité (E3) raccordée à celle-ci pour la séparation du solvant du courant de produit (20).

27. Utilisation d'un dispositif selon l'une des revendications 24 à 26, pour la production d'une composition qui contient substantiellement des borosilazanes monomères et/ou polymères carbonés et une fraction de borosilazanes monomères, oligomères et/ou polymères halogénés et carbonés, calculée en tant qu'halogénure, de 0,01 ppm en poids à 0,1 % en poids.
